(19) Europäisches Patentamt
European Patent Office
Office européen des brevets

(11) **EP 2 680 451 A2**

(12) **EUROPEAN PATENT APPLICATION**

(43) Date of publication:
**01.01.2014 Bulletin 2014/01**

(51) Int Cl.:
**H04B 1/52** (2006.01)

(21) Application number: **13174591.1**

(22) Date of filing: **01.07.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.06.2012 US 201261666275 P**

(71) Applicant: **Sequans Communications Limited Reading, Berkshire RG41 5RB (GB)**

(72) Inventors:
• **Modha, Kuldip**
  **Wokingham, Berkshire RG40 1XX (GB)**
• **Harvey, Jackson**
  **Savage, MN Minnesota 55378 (US)**
• **Winiecki, Thomas**
  **Reading, Berkshire RG1 8QE (GB)**

(74) Representative: **Morrall, Jonathan Ian McLachlan et al**
  **Kilburn & Strode LLP**
  **20 Red Lion Street**
  **London WC1R 4PJ (GB)**

(54) **Transceiver device**

(57) A transceiver for RF signals uses receiving circuitry to derive control signals to reduce undesired signal frequencies in the output of the transmitting circuitry.

Fig 1

EP 2 680 451 A2

**Description**

The present disclosure relates to the field of communications. Embodiments relate to transceivers and methods of transmitting and receiving radio frequency signals

**Background**

RF transmitters often have a so-called mixer for changing the frequency f1 of an information-carrying, for example baseband, signal to a desired transmission frequency. The mixer typically multiplies together the frequency f1 with a frequency f2 of a local oscillator to provide both a sum (f1+f2) and a difference (f2-f1) frequency. One of these, for example the sum frequency (f1+f2), is the desired frequency, and the other, in this example the difference frequency, must be discarded for example by filtering. Good mixer design can reduce other parasitic signals -for example f1 or f2, or harmonics- in the mixer output.

However where the mixer is supplied with an information-carrying signal having more than one component, each component being derived over a different signal path, path differences and different signal conditions in the paths may result in slight differences between the components, even where none should be present. Especially where two components are mutually orthogonal, these differences may give rise to significant amounts of local oscillator frequency signals at the output of the mixer.

Clearly it would be possible to filter undesired frequencies out. However it is desirable to minimise losses, which inevitably occur where unwanted signals are being produced and eliminated by filtering. Also many transmitters are required to be frequency-agile, and so will have a frequency-variant local oscillator. Hence relatively complex filters and control systems would be needed to track the changing local oscillator frequency to eliminate it from an output.

A receiver typically receives signals, e.g. radio-frequency signals, and processes the received signals to derive from them the information content.

One technique for producing a baseband signal from radio frequency signals is known as the superheterodyne technique and another is termed the homodyne technique.

As is well known, in a superheterodyne receiver, the RF signals are mixed with a first frequency signal to provide a so-called "IF" (intermediate frequency) signal. This in turn is then mixed with a second frequency signal to derive the baseband signal. In some cases more than two frequency conversion stages may be used in sequence.

Again, as is well known, in a homodyne receiver, a received RF signal is directly mixed with a single radio frequency signal to derive the baseband signals.

A transmitter performs an analogous process to a receiver but in reverse, i.e. it takes in information signals at a relatively low baseband frequency and transforms those signals so a derived signal can be emitted at a radio frequency.

In the communication art, it is often convenient to construct transmit signals from two separate baseband signals representing real and imaginary part of a complex signal. In such systems, the two baseband signals are independently filtered, amplified or otherwise manipulated before they are combined and up-converted onto a single high frequency carrier. The two signals are referred to as in-phase (I) and quadrature (Q) signals.

A transmitter for I and Q signals operating in a manner similar to a superheterodyne receiver can be termed an indirect up-conversion transmitter, although it is sometimes referred to as a superheterodyne transmitter.

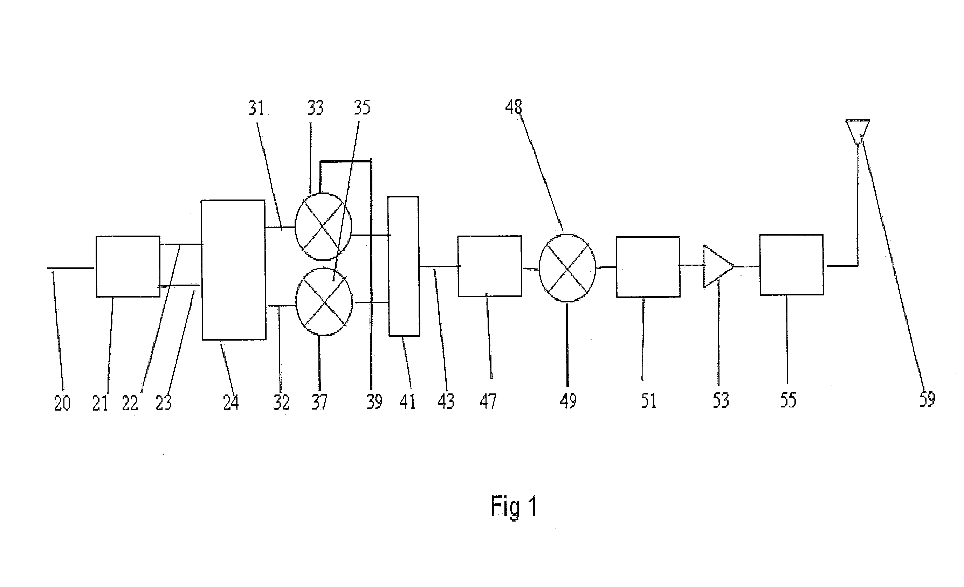

Referring to Figure 1, an indirect up-conversion transmitter has an input (20) for information-carrying signals, in this case digital signals. The input (20) is provided to an IQ modulator (21) that has first and second outputs (22, 23) respectively for I (in-phase) and Q (quadrature) signals. The I and Q signals are provided as input to a DAC (24) which has two analogue outputs (31, 32) corresponding respectively to the digital I signal and the digital Q signal. The analog I signal (31) is input to a first two-input mixer (33) receiving a LO frequency signal at its second input (39). The analogue Q output (32) is provided to a second two-input mixer (35) receiving at its second input a frequency (37) that is identical to the LO signal on input (39) but orthogonal to it. In other words there is a 90 degree phase shift between the two inputs (37) and (39).

As is known to those skilled in the art each mixer (33, 35) provides outputs at two frequencies, the two frequencies being i) the sum of the two input frequencies and ii) the difference between the two input frequencies. The four signals (two from each mixer) are combined in a combiner stage (41) to provide a combined signal in analog form (43). The analog combined signal (43) is provided to a bandpass filter (47) that selects the desired frequency from the input, in this case the sum frequencies. The difference frequencies are blocked.

The output of the bandpass filter (47) is referred to as the intermediate frequency (IF) and this is provided to a IF two-input mixer (48) having as its other input an RF signal (49) related to the desired frequency of the output RF signal from the transmitter. In this case the relationship is such that the sum of the frequencies at the two inputs to the third mixer (48) corresponds to the desired output frequency.

Again as known to those skilled in the art the mixer provides two output frequencies, namely i) the sum of the two input frequencies and ii) the difference between the two input frequencies. The IF mixer output is connected to a bandpass filter (51). The difference frequency is rejected by the band pass filter (51) while the sum frequency is passed by it. The sum frequency from the band pass filter (51) is provided as input to a power amplifier (53) whose output feeds a transmit aerial (59) via an RF filter (55).

Another type of transmitter is the homodyne or direct-conversion transmitter. This architecture may be considered favorable as it uses fewer components, and occupies les real-estate on chip.

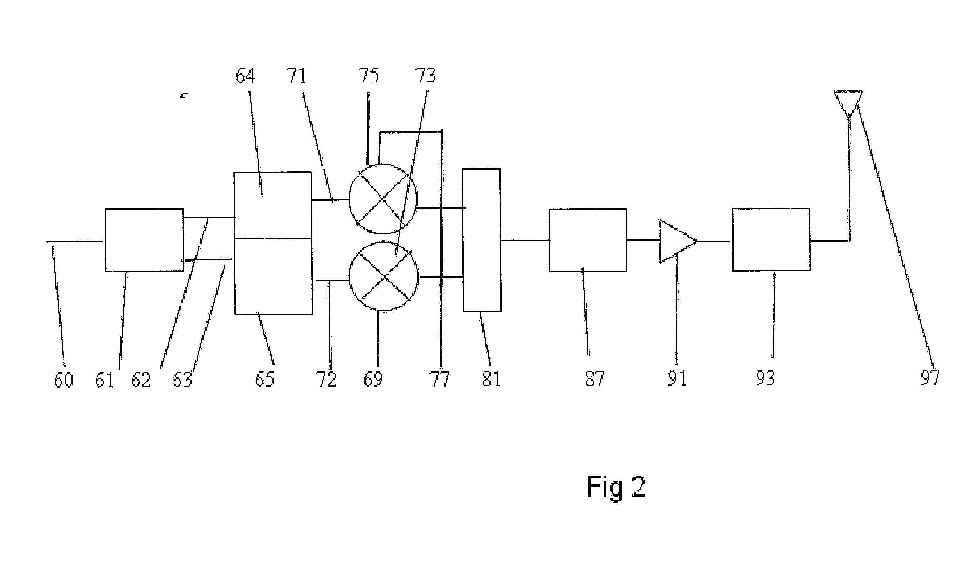

Referring to Figure 2, an up-conversion IQ type transmitter has an input (50) of digital signals input to an IQ modulator (61) that converts the baseband information into digital I (62) and Q (63) data. This is then converted into analog I (71) and analog Q (72) data using a respective digital to analogue converter (64; 65). The analog Q data (72) is input to a first mixer (73) receiving a mixing input (69); the analog I data (71) is input to a second mixer (75) receiving a mixing input (77). The mixing inputs are of identical frequency f2 but are mutually orthogonal. The outputs (f1+f2; f1-f2) of the two mixers (73, 75) are combined in a combiner (81) and then fed to a bandpass filter (87) that passes the desired frequency (f1+f2) and rejects the image frequency (F1-f2). The filter output is input to a high frequency power amplifier (91) and its output in turn is fed to an antenna (97) via an RF filter (93).

As an example of issues addressed by this disclosure, quadrature-signal type transmitters suffer from non idealities in converting I (In phase) and Q (Quadrature) signals to radio frequency (RF). There is gain and phase mismatch between the signals over the I and the Q path. These can cause less-than-optimal image rejection and consequently degradation of the signal-to-noise ratio. DC offsets between the two component signals can cause the local oscillator (LO) frequency to feed-through the mixer(s) to the transmitter output and appear as spectral spurs.

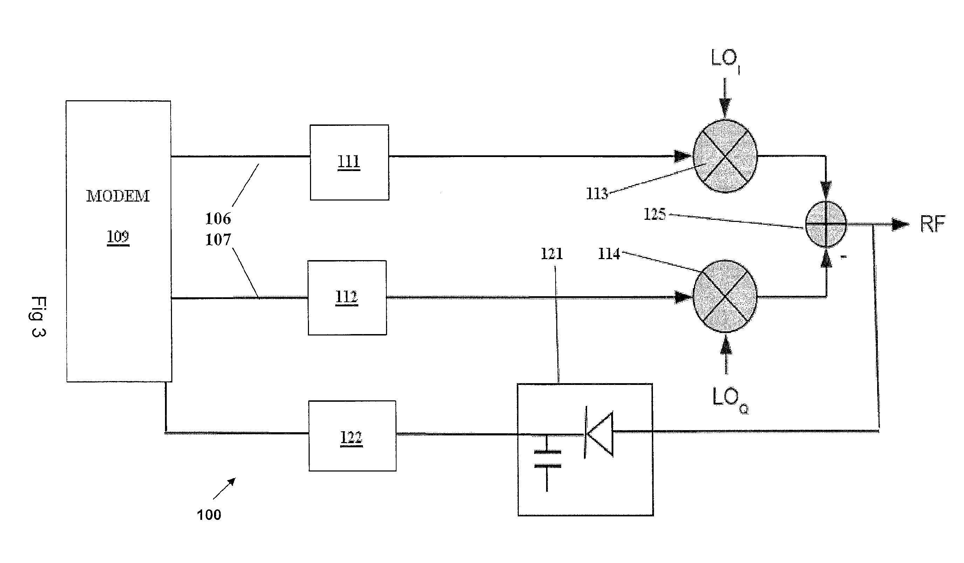

Referring to Figure 3, an exemplary transmitter circuit (100) has a modem (109) providing base-band digital in-phase (106) and quadrature (107) output signals for transmission. Each signal (106, 107) is converted to analog in a respective DAC (111,112) to provide analog outputs at a baseband frequency $\omega$. The analog outputs are input to respectively an I-mixer (113) and a Q-mixer (114). Each mixer receives a frequency input (LO) at transmitter local oscillator frequency ($\Omega_T$), the I-mixer (113) receiving the LO as an in phase signal and the Q-mixer (114) receiving the LO signal with a 90 degree phase shift The mixer outputs are fed to a combiner (125) for power amplification and transmission. An envelope detector (121), shown figuratively as a diode and capacitor receives the output of the combiner (125) and is connected back to the modem (105) via an ADC (122)

The output of the combiner (125) contains at least three frequencies, including the desired frequency, the sum of the transmitter local oscillator frequency and the baseband frequency $\Omega_T + \omega$ and undesired frequencies, the transmitter local oscillator frequency $\Omega_T$ and the image frequency $\Omega_T - \omega$. The envelope detector (121) provides two frequencies, a first termed ftone equal to desired frequency $\Omega_T + \omega - \Omega_T, (\omega)$ and the second termed 2ftone equal to desired frequency $\Omega_T + \omega - [\Omega_T - \omega]$, the image frequency (=2 $\omega$)

The amplitudes of the ftone and 2ftone signals will depend on the how big the LO feed-through and image tones are - keeping the wanted tone at the same level. Using the ftone and 2ftone signals can allow cancelling the LO feed-through and image tones. This is achieved by analysing the ftone and 2ftone signals by a fast Fourier transform (FFT) function in the modem. Minimizing the ftone and 2ftone while keeping the wanted tone constant effectively means cancelling the LO feed-through and image tones.

The ftone and 2ftone signals may be controlled by applying correction coefficients through the I and Q digital-to-analogue converters (111,112) at the transmitter input, in an effort to optimise the LO and image frequencies.

For long term evolution (LTE) the required output power range is from -40dBm to 23dBm. To achieve this radio frequency integrated circuit (RFIC) gain should have a wide range of analog baseband and RF gain with optimal LO feed-through and image frequency rejection for all of them. This requirement imposes tough performance specifications on the envelope detector such as wide dynamic operating range, stability over temperature and process variations. Additionally, to support multiple bands either one detector with complex frequency multiplexing scheme is required or multiple detectors are needed which would occupy large silicon area.

It is thus desirable to provide a transmitter where use of an envelope detector for this purpose is avoided.

### Brief summary

In a general aspect there is provided a transceiver for RF signals in which receiving circuitry is used to derive control signals to reduce undesired signal frequencies in the output of transmitting circuitry.

In another general aspect, there is provided a transceiver for RF signals in which receiving circuitry is used to determine transmitter gain and phase imbalance, without the need for an envelope detector.

In another general aspect, there is provided a transceiver for RF signals in which receiving circuitry is used to determine I and Q offsets, without the need for an envelope detector.

In another general aspect there is provided a method of determining gain and phase imbalance in transmitting circuitry of a transceiver by using the receiving circuitry of the transceiver.

In another general aspect there is provided a method of determining I and Q offsets in transmitting circuitry of a transceiver by using the receiving circuitry of the transceiver.

In yet another general aspect there is provided a method of determining path imbalances in both the transmitter and the receiver of a transceiver by connecting an output signal of the transmitter to the input of the receiver, applying a test tone to the input of the transmitter, and processing down-converted frequencies related to the test tone.

In a more specific aspect there is provided an RF transceiver comprising a transmitter, an antenna and a receiver having receiving circuitry for receiving RF signals from the antenna, the transmitter having first and second analog signal paths for carrying in-phase and quadrature signals and the transmitter being arranged in use to provide RF signals to the antenna, the transceiver having means for coupling RF signals from the transmitter to an RF input of the receiving circuitry and means for causing the receiving circuitry to form signals related to undesired frequencies in the RF signals from the transmitter, the transceiver having processing circuitry adapted to respond to the signals related to the undesired frequencies to control the transmitter to reduce the undesired frequencies.

The undesired frequencies may be at least partly due to differences between the first and second analog signal paths.

In another more specific aspect there is provided an RF transceiver comprising a transmitter, an antenna and a receiver having receiving circuitry for receiving RF signals from the antenna, the transmitter having first and second analog signal paths for carrying in-phase and quadrature signals and the transmitter being arranged in use to provide RF signals to the antenna, the transceiver having means for coupling RF signals from the transmitter to an RF input of the receiving circuitry and means for causing the receiving circuitry to form downconverted signals related to undesired frequencies in the RF signals from the transmitter, the transceiver having processing circuitry adapted to respond to the downconverted signals to control the receiving circuitry to reduce the effect of path imbalances

The receiving circuitry may comprise first and second receive mixers arranged to down-convert the RF signals from the antenna by mixing with signals in phase-quadrature, the processing circuitry being responsive to the down-converted signals.

The transceiver may have a desired output frequency, and the receive mixers be configured to down-convert the undesired frequencies by mixing with a signal having the desired frequency.

The transceiver may have a desired output frequency, and the receive mixers be configured to down-convert the undesired frequencies by mixing with a frequency offset from the desired frequency.

The transmitter is a direct up-conversion transmitter. It may be an indirect up-conversion transmitter.

The means for coupling the RF signals of the transmitter to an RF input of the receiving circuitry may be an on-chip loopback path.

The transceiver may have a loopback path from an input of a transmit power amplifier and an input to a low-noise amplifier of the receiving circuitry.

In a further aspect there is disclosed a method of transmitting RF signals from a transceiver comprising a transmitter, an antenna and a receiver having receiving circuitry for receiving RF signals from the antenna, the method comprising providing respective phase-quadrature signals over first and second analog signal paths, and converting signals from the first and second analog signal paths to RF for the antenna, coupling RF signals from the transmitter to an RF input of the receiving circuitry; controlling the receiving circuitry to form signals related to undesired frequencies in the RF signals from the transmitter, and in response to the signals related to the undesired frequencies, controlling the transmitter to reduce the undesired frequencies.

The method may comprise mixing in-phase and quadrature information-carrying signals with respectively an in-phase transmitter LO signal and a quadrature transmitter LO signal to provide RF signals including a desired frequency.

The method may comprise mixing a signal from the RF input with an in-phase receiver LO signal and a quadrature receiver LO signal to down-convert undesired frequencies in the RF output from the amplifier to form in-phase and quadrature receiver signals; and using the in-phase and quadrature receiver signals, controlling the transmitter to reduce said undesired frequencies.

In a still more specific aspect there is provided an RF transceiver comprising a transmitter and a receiver, the transmitter having a first transmit mixer and a second transmit mixer, the first and second transmit mixers being configured to be driven in phase-quadrature, the transmitter having an RF output, the transceiver having means for coupling the RF signals from the transmitter to an RF input of the receiver, wherein the receiver has a first receive mixer and a second receive mixer, the receive mixers being configured to be driven in phase-quadrature, and adapted to provide in-phase and quadrature signals related to undesired frequencies in the RF signals from the transmitter, the transceiver having processing circuitry adapted to respond to the in-phase and quadrature signals related to undesired frequencies in the RF signals from the transmitter to control the transmitter to reduce the undesired frequencies in the RF signals from the transmitter.

In yet another aspect there is provided a method of transmitting RF signals, the method comprising mixing in-phase and quadrature information-carrying signals with respectively an in-phase transmitter LO signal and a quadrature transmitter LO signal to provide an RF signal having a desired frequency; coupling the RF signal of the transmitter to an RF input of a calibration device, having a calibration device LO signal, mixing a signal from the RF output with an in-phase calibration device LO signal and a quadrature calibration device LO signal to down-convert undesired frequencies in the RF output from the amplifier to form in-phase and quadrature calibration device signals; and using the in-phase and quadrature calibration device signals, controlling the transmitter to reduce the undesired frequencies at the RF output from the transmitter.

In a still further aspect there is provided a method of transmitting RF signals using an RF transceiver comprising a transmitter and a receiver, the method comprising mixing in-phase and quadrature information-carrying signals with respectively an in-phase transmitter LO signal and a quadrature transmitter LO signal to provide RF signals including a desired frequency; coupling the RF signals of the transmitter to an RF input of the receiver, mixing a signal from the RF output with an in-phase receiver LO signal and a quadrature receiver LO signal to down-convert undesired frequencies in the RF output from the amplifier to form in-phase and quadrature receiver signals; and using the in-phase and quadrature receiver signals, controlling the transmitter to reduce the undesired frequencies at the RF output from the transmitter.

In a further aspect there is provided a method of measuring gain and phase imbalance in the transmitter of a transceiver, which transmitter is configured to mix a baseband signal with a local oscillator frequency, the method comprising providing, as baseband signal, a test tone to the transmitter input, downconverting the transmitter output using the receiver of the transceiver, and evaluating the real and imaginary parts of a downconverted signal corresponding to a transmit image frequency to derive said gain and phase imbalance.

In a yet further aspect there is provided a method of measuring offsets in the transmitter of a transceiver, which transmitter is configured to mix a baseband signal with a local oscillator frequency, the method comprising providing, as baseband signal, a test tone to the transmitter input, down-converting the transmitter output using the receiver of the transceiver, and evaluating the real and imaginary parts of a down-converted signal corresponding to local oscillator leakage to derive said offsets

## Brief description of the drawings.

In the drawings:-

Figure 1 shows a partial block schematic diagram of an indirect up-conversion transmitter;
Figure 2 shows a partial block schematic diagram of a direct up-conversion transmitter;
Figure 3 shows a partial black schematic diagram of a transmitter using an envelope detector;
Figure 4 shows a partial block schematic diagram of a transceiver according to an embodiment; and
Figure 5 shows a schematic of an example of an on-chip loopback connection.

## Detailed Description

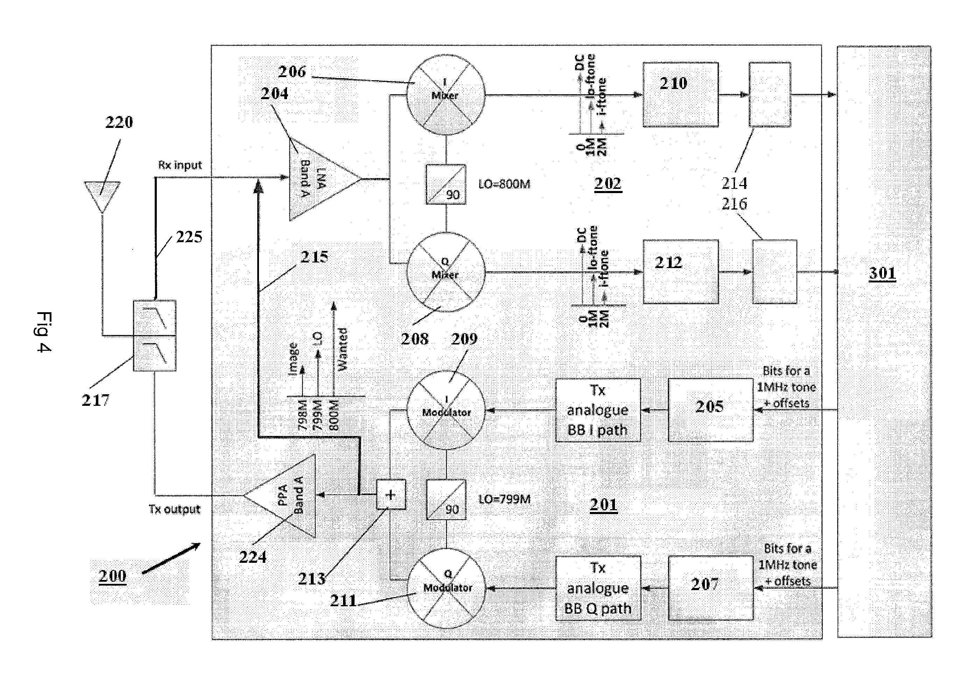

Referring Fig 4, a transceiver (200) has a first integrated circuit with a transmitter (201) and a receiver (202), and on a separate chip a modem (301) connected to both the transmitter and receiver. The transmitter (201) has first and second DACs (205,207) respectively receiving I and Q digital signals and-in this case-feeding analog versions of those signals to respective transmitter mixers (209, 211). For the sake of easy description, in this embodiment, the bit sequence from the modem is assumed to provide a 1 MHz baseband tone ($\omega$=1 MHz) and direct up-conversion is employed in the transmitter.

The outputs of the transmitter mixers (209,211) are combined together in a combiner (213), and the resultant signal is fed via a pre-power amplifier (224) and splitter/duplexer (217) to an antenna (220). The signal consists of the desired frequency $\Omega_T$+ $\omega$, [i.e. $\Omega_T$ + 1 MHz] and undesired frequencies $\Omega_T$, (the transmitter LO breakthrough signal) and $\Omega_T$ - $\omega$, [i.e. $\Omega_T$ -1 MHz] (the image frequency).

The receiver (202) has a low noise amplifier (204) coupled to receive RF signals from the antenna (220) via the duplexer (217). The output of the LNA is fed to two receiver mixers (206, 208). The first receiver mixer (206) receives at its second input a signal at a first frequency -the receiver local oscillator signal $\Omega_R$ as does the second receiver mixer (208) with however a 90 degree phase shift between the two second inputs, so that the second receiver mixer operates in phase-quadrature to the first.

Each receiver mixer (206, 208) has a respective output coupled via a respective analog signal processing path (210,212) to a respective ADC (214,216) whose digital outputs couple into the modem (301).

In some embodiments the output of the combiner (213), forming the input to the power amplifier (224) are coupled via an RF signal path (215) to the input of the LNA (204). The path (215) may be a switchable path- i.e. may contain active components that enable or disable it- or it may be a linked path, capable of being broken after a calibration step has been carried out. In the illustrated embodiment the RF signal path (215) is a connection from the input of the power amplifier to the input of the LNA (204).

For this class of embodiments the on-chip RF loop back connection connects the transmitter modulator output to the receiver low noise amplifier (204) input for the frequency band of interest with the pre-power amplifier (224) powered down. This path allows the scheme to be used for on-the-fly calibration in the field and for calibration, for example, on the production line.

The most straightforward loop-back is a resistive attenuator (such as a T or pi attenuator) that provides reasonably high impedance to the transmitter circuits and provides enough attenuation that the receiver circuits are not overloaded. Such an attenuator would need one switch or several switches that would be opened to allow the loop-back to be disabled during normal operation. It would be possible to use an active buffer to drive that attenuator, to load the transmitter circuits even less and provide even more isolation when off. That is, the buffer would be disabled when not needed. The buffer could be on either the upstream or downstream side of the attenuator, or both.

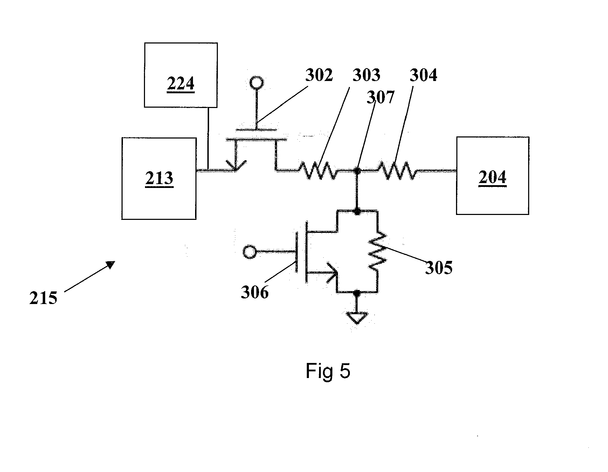

Referring to Figure 5, an example on-chip loop-back connection (215) consists of a first MOST (302) having one end of its current path connected to the output of the combiner (213), and the other end of the main current path connected via the series connection of first and second resistors (303, 304) to the input of the LNA(204). A common node (307) of the series resistors (303,304) is connected via a third resistor (305) to earth. The third resistor is bridged by a second MOST (306). The two MOSTs (302,306) are arranged to be driven by complementary signals. The first and third resistors (303,305) are selected to provide a reasonably high impedance to the transmitter, and their ratio is chosen to divide the potential at the combiner output to a suitable level for input to the LNA. The second resistor (304) is selected to provide a high impedance at the input to the LNA.

In use, in a first switching state the first MOST (302) is on and provides a low resistance, while the second MOST (306) is off and provides a high resistance. Signals from the combiner (213) are thus divided by the first and second resistors and input to the LNA.

In the second opposite switching state, the first MOST is off, substantially preventing signal flow through first resistor (303). The second MOST (306) is on, effectively clamping the common node (307) to earth.

The receiver mixers (206,208) are wideband down-converting mixers and, because of their use in the receive path of the receiver, are optimised for sensitive signals, process and temperature variations.

The receiver mixers (206,208) can be controlled to produce signals similar to those that would otherwise be generated by the envelope detector (121) at the transmitter output, if one had been present.

As noted above, there are three signal frequencies input from the transmitter, namely the desired frequency $\Omega_T + \omega$, and undesired frequencies $\Omega_T$, the transmitter LO breakthrough signal and $\Omega_T - \omega$, the image frequency. Thus after mixing with the receiver LO signal, there are three down-converted signal frequencies, S1, S2 and S3 defined as follows:

$$S1 = \Omega_T + \omega - \Omega_R \qquad [(\Omega_T - \Omega_R) + 1 \text{ MHz}]$$

$$S2 = \Omega_T - \Omega_R$$

and

$$S3 = \Omega_T - \omega - \Omega_R \qquad [(\Omega_T - \Omega_R) - 1 \text{ MHz}]$$

For S2 to be non-zero, it is required that the local oscillators frequencies of the transmitter and receiver be different. This can be achieved by controlling the LO of the receiver to be spaced by a predetermined arbitrarily selected amount from the LO of the transmitter. Alternatively it can be achieved by controlling the receiver LO to be at $\Omega_T + \omega$, the desired frequency.

Another constraint is that all of signals S1, S2 and S3 be within the analog baseband channel bandwidth supported by the receiver.

Signals S1, S2 and S3 are available on the receiver's I and Q path of the chain and then processed using a FFT function in the modem (301). Based on the information from the FFT step, the modem is arranged to control offsets to I and Q DAC inputs of the transmitter, for example aiming to reduce or completely annul S2 and S3.

Suppression of S2 and S3 indicates the complete cancelation of the transmitter LO feed-through and image signals. Any IQ mismatch in the receiver chain will not impair this scheme as these are second-order effects; the aim is to correct for large amplitudes of S2 and S3 signals in I and Q paths of the receiver chain.

The modem (301), since it is part of a radio that will receive OFDM or SC-FDM already has FFT circuitry as part of the normal signal path. However, in transceivers where such circuitry is not present, digital filters and peak detectors or power detectors can be used for the same purpose. That is, a narrow-band filter around each expected tone allows just that tone energy through. Then the amplitude or RMS value of that tone is measured with the peak or power detector. Equally, an FFT block could be added just for calibration if one were not already present.

Consider a test tone sent into the DACs (205,207) as follows

$$\bullet \quad \begin{pmatrix} I \\ Q \end{pmatrix} = \begin{pmatrix} 1 - \varepsilon_C & -\delta_C \\ -\delta_C & 1 + \varepsilon_C \end{pmatrix} \cdot \begin{pmatrix} \cos \omega t \\ \sin \omega t \end{pmatrix} - \begin{pmatrix} I_c \\ Q_c \end{pmatrix}$$

The quadrature transmitter is characterized by

- LO frequency $\Omega_T$, global phase $\Phi_T$
- Gain of I-branch $(1 + \varepsilon_T)$, gain of Q-branch is $(1 - \varepsilon_T)$
- Phase of I-branch $-\delta_T$, phase of Q-branch is $+\delta_T$

-

DC offset of I-branch and Q branch are $\begin{pmatrix} I_T \\ Q_T \end{pmatrix}$

The quadrature receiver is characterized by

- LO frequency $\Omega_R$, global phase $\Phi_R$
- Gain of I-branch $(1 + \varepsilon_R)$, gain of Q-branch is $(1 - \varepsilon_R)$
- Phase of I-branch $-\delta_R$, phase of Q-branch is $+\delta_R$
- DC offset is not considered, this simply leads to a DC contribution on the RX signal

The calculations will assume that all frequencies are positive: $\Omega_T, \Omega_R, \omega > 0$.

First the RF signal at the transmit output is calculated. This calculation assumes all impairments and corrections are small $(\varepsilon_C, \varepsilon_T, \varepsilon_R, \delta_C, \delta_T, \delta_R, I_C, I_T, Q_C, Q_T \ll 1)$. For example, the following approximations are used:

$\sin \delta_T \approx \delta_T$, $\cos \delta_T \approx 1$, or $(1 - \varepsilon_c) \cdot (1 + \varepsilon_T) \approx 1 - \varepsilon_c + \varepsilon_T$. Further, it is assumed that only frequencies close to $\Omega_T$ will be amplified in the transmitter.

$$
\begin{aligned}
RF = {} & [(1 - \varepsilon_C)\cos \omega t - \delta_C \sin \omega t - I_c + I_T] \cdot (1 + \varepsilon_T) \cdot \cos(\Omega_T t + \Phi_T - \delta_T) \\
& + [-\delta_C \cos \omega t + (1 + \varepsilon_C)\sin \omega t - Q_c + Q_T] \cdot (1 - \varepsilon_T) \cdot \sin(\Omega_T t + \Phi_T + \delta_T)
\end{aligned}
$$

$$
\begin{aligned}
RF \approx {} & [(1 - \varepsilon_C)\cos \omega t - \delta_C \sin \omega t - I_c + I_T] \cdot (1 + \varepsilon_T) \cdot [\cos(\Omega_T t + \Phi_T) + \delta_T \cdot \sin(\Omega_T t + \Phi_T)] \\
& + [-\delta_C \cos \omega t + (1 + \varepsilon_C)\sin \omega t - Q_c + Q_T] \cdot (1 - \varepsilon_T) \cdot [\sin(\Omega_T t + \Phi_T) + \delta_T \cdot \cos(\Omega_T t + \Phi_T)]
\end{aligned}
$$

$$
\begin{aligned}
RF \approx {} & \cos \omega t \cdot \cos(\Omega_T t + \Phi_T) + \sin \omega t \cdot \sin(\Omega_T t + \Phi_T) \\
& + (\varepsilon_T - \varepsilon_c) \cdot [\cos \omega t \cdot \cos(\Omega_T t + \Phi_T) - \sin \omega t \cdot \sin(\Omega_T t + \Phi_T)] \\
& + (\delta_T - \delta_c) \cdot [\sin \omega t \cdot \cos(\Omega_T t + \Phi_T) + \cos \omega t \cdot \sin(\Omega_T t + \Phi_T)] \\
& + (I_T - I_c) \cdot [\cos(\Omega_T t + \Phi_T)] + (Q_T - Q_c) \cdot [\sin(\Omega_T t + \Phi_T)]
\end{aligned}
$$

$$
\begin{aligned}
RF \approx {} & \cos((\Omega_T - \omega)t + \Phi_T) \\
& + (\varepsilon_T - \varepsilon_c) \cdot \cos((\Omega_T + \omega)t + \Phi_T) + (\delta_T - \delta_c) \cdot \sin((\Omega_T + \omega)t + \Phi_T) \\
& + (I_T - I_c) \cdot \cos(\Omega_T t + \Phi_T) + (Q_T - Q_c) \cdot \sin(\Omega_T t + \Phi_T)
\end{aligned}
$$

So as noted above there are three tones at RF, the wanted tone with frequency $(\Omega_T - \omega)$, the image at frequency

$(\Omega_T + \omega)$ and LO leakage at frequency $\Omega_T$.

The power of the image tone is given by $(\varepsilon_T - \varepsilon_c)^2 + (\delta_T - \delta_c)^2$. This means both gain and phase imbalances contribute power to the image tone. Similarly, the power of the LO leakage tone is given by $(I_T - I_c)^2 + (Q_T - Q_c)^2$, which means both DC offset in I and Q-branch contribute here.

Measuring the power in the unwanted tones does not allow direct separation of gain and phase imbalance or separation of I or Q DC offset.

However, in the method described, the three tones are down-converted using a quadrature mixer. This is expressed below.

$$
BB = \cos\!\big((\Omega_T - \omega)t + \Phi_T\big) \cdot \begin{pmatrix} (1 + \varepsilon_R)\cos(\Omega_R t + \Phi_R + \delta_R) \\ (1 - \varepsilon_R)\sin(\Omega_R t + \Phi_R - \delta_R) \end{pmatrix}
$$

$$
+ (\varepsilon_T - \varepsilon_c) \cdot \cos\!\big((\Omega_T + \omega)t + \Phi_T\big) \cdot \begin{pmatrix} (1 + \varepsilon_R)\cos(\Omega_R t + \Phi_R + \delta_R) \\ (1 - \varepsilon_R)\sin(\Omega_R t + \Phi_R - \delta_R) \end{pmatrix}
$$

$$
+ (\delta_T - \delta_c) \cdot \sin\!\big((\Omega_T + \omega)t + \Phi_T\big) \cdot \begin{pmatrix} (1 + \varepsilon_R)\cos(\Omega_R t + \Phi_R + \delta_R) \\ (1 - \varepsilon_R)\sin(\Omega_R t + \Phi_R - \delta_R) \end{pmatrix}
$$

$$
+ (I_T - I_c) \cdot \cos(\Omega_T t + \Phi_T) \cdot \begin{pmatrix} (1 + \varepsilon_R)\cos(\Omega_R t + \Phi_R + \delta_R) \\ (1 - \varepsilon_R)\sin(\Omega_R t + \Phi_R - \delta_R) \end{pmatrix}
$$

$$
+ (Q_T - Q_c) \cdot \sin(\Omega_T t + \Phi_T) \cdot \begin{pmatrix} (1 + \varepsilon_R)\cos(\Omega_R t + \Phi_R + \delta_R) \\ (1 - \varepsilon_R)\sin(\Omega_R t + \Phi_R - \delta_R) \end{pmatrix}
$$

Only frequencies near DC are considered:

$$
2 \cdot BB \approx \begin{pmatrix} (1 + \varepsilon_R)\cos\!\big((\Omega_R - \Omega_T + \omega)t + (\Phi_R - \Phi_T) + \delta_R\big) \\ (1 - \varepsilon_R)\sin\!\big((\Omega_R - \Omega_T + \omega)t + (\Phi_R - \Phi_T) - \delta_R\big) \end{pmatrix}
$$

$$
+ (\varepsilon_T - \varepsilon_c) \cdot \begin{pmatrix} +(1 + \varepsilon_R)\cos\!\big((\Omega_R - \Omega_T - \omega)t + (\Phi_R - \Phi_T) + \delta_R\big) \\ +(1 - \varepsilon_R)\sin\!\big((\Omega_R - \Omega_T - \omega)t + (\Phi_R - \Phi_T) - \delta_R\big) \end{pmatrix}
$$

$$
+ (\delta_T - \delta_c) \cdot \begin{pmatrix} -(1 + \varepsilon_R)\sin\!\big((\Omega_R - \Omega_T - \omega)t + (\Phi_R - \Phi_T) + \delta_R\big) \\ +(1 - \varepsilon_R)\cos\!\big((\Omega_R - \Omega_T - \omega)t + (\Phi_R - \Phi_T) - \delta_R\big) \end{pmatrix}
$$

$$
+ (I_T - I_c) \cdot \begin{pmatrix} +(1 + \varepsilon_R)\cos\!\big((\Omega_R - \Omega_T)t + (\Phi_R - \Phi_T) + \delta_R\big) \\ +(1 - \varepsilon_R)\sin\!\big((\Omega_R - \Omega_T)t + (\Phi_R - \Phi_T) - \delta_R\big) \end{pmatrix}
$$

$$
+ (Q_T - Q_c) \cdot \begin{pmatrix} -(1 + \varepsilon_R)\sin\!\big((\Omega_R - \Omega_T)t + (\Phi_R - \Phi_T) + \delta_R\big) \\ +(1 - \varepsilon_R)\cos\!\big((\Omega_R - \Omega_T)t + (\Phi_R - \Phi_T) - \delta_R\big) \end{pmatrix}
$$

Again, all impairments are assumed to be small which simplifies the equations further.

$$2 \cdot BB \approx \begin{pmatrix} \cos\big((\Omega_R - \Omega_T + \omega)t + (\Phi_R - \Phi_T)\big) \\ \sin\big((\Omega_R - \Omega_T + \omega)t + (\Phi_R - \Phi_T)\big) \end{pmatrix}$$

$$+ \varepsilon_R \cdot \begin{pmatrix} +\cos\big((\Omega_R - \Omega_T + \omega)t + (\Phi_R - \Phi_T)\big) \\ -\sin\big((\Omega_R - \Omega_T + \omega)t + (\Phi_R - \Phi_T)\big) \end{pmatrix}$$

$$+ \delta_R \cdot \begin{pmatrix} -\sin\big((\Omega_R - \Omega_T + \omega)t + (\Phi_R - \Phi_T)\big) \\ -\cos\big((\Omega_R - \Omega_T + \omega)t + (\Phi_R - \Phi_T)\big) \end{pmatrix}$$

$$+ (\varepsilon_T - \varepsilon_c) \cdot \begin{pmatrix} +\cos\big((\Omega_R - \Omega_T - \omega)t + (\Phi_R - \Phi_T)\big) \\ +\sin\big((\Omega_R - \Omega_T - \omega)t + (\Phi_R - \Phi_T)\big) \end{pmatrix}$$

$$+ (\delta_T - \delta_c) \cdot \begin{pmatrix} -\sin\big((\Omega_R - \Omega_T - \omega)t + (\Phi_R - \Phi_T)\big) \\ +\cos\big((\Omega_R - \Omega_T - \omega)t + (\Phi_R - \Phi_T)\big) \end{pmatrix}$$

$$+ (I_T - I_c) \cdot \begin{pmatrix} +\cos\big((\Omega_R - \Omega_T)t + (\Phi_R - \Phi_T)\big) \\ +\sin\big((\Omega_R - \Omega_T)t + (\Phi_R - \Phi_T)\big) \end{pmatrix}$$

$$+ (Q_T - Q_c) \cdot \begin{pmatrix} -\sin\big((\Omega_R - \Omega_T)t + (\Phi_R - \Phi_T)\big) \\ +\cos\big((\Omega_R - \Omega_T)t + (\Phi_R - \Phi_T)\big) \end{pmatrix}$$

Assuming $\Omega_R > \Omega_T + \omega > \Omega_T$. The I/Q vectors are written as complex number representations, and using an abbreviation $\Phi \equiv (\Phi_R - \Phi_T)$. The result is:-

$$2 \cdot BB \approx \exp\big(j(+(\Omega_R - \Omega_T + \omega)t + \Phi)\big)$$
$$+ \varepsilon_R \cdot \exp\big(j(-(\Omega_R - \Omega_T + \omega)t - \Phi)\big)$$
$$+ \delta_R \cdot \exp\big(j(-(\Omega_R - \Omega_T + \omega)t - \Phi + \pi/2)\big)$$
$$+ (\varepsilon_T - \varepsilon_c) \cdot \exp\big(j(+(\Omega_R - \Omega_T - \omega)t + \Phi)\big)$$
$$+ (\delta_T - \delta_c) \cdot \exp\big(j(+(\Omega_R - \Omega_T - \omega)t + \Phi + \pi/2)\big)$$
$$+ (I_T - I_c) \cdot \exp\big(j(+(\Omega_R - \Omega_T)t + \Phi)\big)$$
$$+ (Q_T - Q_c) \cdot \exp\big(j(+(\Omega_R - \Omega_T)t + \Phi + \pi/2)\big)$$

Hence there is a total of four different tones, three due to the original transmitter impairments and one due to receiver IQ imbalance as shown below. The RX DC component is shown as well (not shown in calculations).

The phase relationship between all the tones allows separation of gain and phase imbalance and also of Dc offset in the I branch and the Q branch: Ignoring the receiver offset terms and using the identity $\exp(j \cdot \pi/2) = j$

$$2 \cdot BB \approx \{ \qquad\qquad\qquad \exp(j(\Omega_R - \Omega_T + \omega)t)$$
$$+\big((\varepsilon_T - \varepsilon_c) + j \cdot (\delta_T - \delta_c)\big) \cdot \exp(j(\Omega_R - \Omega_T - \omega)t)$$
$$+\big((I_T - I_c) + j \cdot (Q_T - Q_c)\big) \cdot \exp(j(\Omega_R - \Omega_T \quad)t) \} \cdot \exp j\Phi$$

That means that, apart from a global phase factor, the real and imaginary parts of the tone corresponding to the TX image represent the gain and phase imbalance, respectively. In the same way, I-offset and Q-offset can be obtained independently by evaluating the real and imaginary parts of the amplitude of the tone corresponding to LO leakage.

Therefore, this scheme allows direct calibration of all four quantities using a single measurement.

The algorithm is a follows:

- Transmit a test tone using $\varepsilon_C = \delta_C = I_C = Q_C = 0$
- Receive the test tone using a quadrature receiver
- Perform an FFT and determine the correct frequency bins
- Find phase factor from wanted tone
- Eliminate this phase factor from frequency bins corresponding to image and leakage
- Measure real and imaginary parts
- Calculate $\varepsilon_C, \delta_C, I_C, Q_C$ by dividing real and imaginary parts of relevant amplitudes by amplitude of wanted tone
- Possible to validate calibration is working by using second measurement with pre-compensation applied

Note that through this division the absolute gain through the loop is removed.

Note further that the scheme also allows measurement and calibration of receiver I/Q and DC offset imbalance using the same measurement, e.g. a single measurement, rather than requiring an iterative process.

If there is no on-chip RF loop back connection (215) available then an off-chip loopback through duplexer (217) or other component can be used with the transmitter pre-power amplifier (224) enabled. However this is only applicable for calibration at production line, due to restriction of test tone transmission in the field.

The digital DC signal level applied to the DACs (205,207) is controlled by the modem, as is the digital amplitude and phase matching of the I and Q signals applied to the DACs, for carrier leakage and image, respectively. This is using circuitry to control the DC level of the I and Q signals (an adder), and circuitry to control the phase and gain of the Q signal relative to the I signal. These parameters are varied to minimize carrier leakage and image. Note that the phase control is not merely a fixed sample delay; rather, the same phase delay is applied to all baseband frequencies.

It is also possible to calibrate the gain and phase at multiple baseband frequencies, in which case the phase and gain correction blocks become more complicated. It is possible to use make use of the IFFT present in an OFDM/SC-FDM system to perform the quadrature amplitude and gain control.

If the calibrated parameters vary significantly with RF frequency, and the transceiver is for a system operating at plural RF frequencies, then it will be necessary to calibrate at plural RF frequencies. This can be done at production time, where enough frequencies are calibrated to allow all operating frequencies to be interpolated.

It can also be done on-the-fly. In that case, at the time the operating frequency is changed, the calibration is performed at the new operating frequency. The calibration can also vary with gain settings; in that case the same options are available (production calibration or on-the-fly calibration). Whether on-the-fly calibration is feasible in either case depends on the timing of the specific system.

The drawings concentrate upon direct up-conversion and down-conversion However indirect up-conversion/down-conversion is also possible, so arrangements with non-zero intermediate frequencies (IF) are also envisaged.

In a further arrangement, a calibration device is provided. The calibration device is similar to a receiver, for instance the receiver (202) described above, or an indirect down-conversion receiver, and has first connections to enable it to be connected to receive an RF output of a quadrature-type RF transmitter, and second connections to enable it to be connected to the modulator of the transmitter

The description above discusses embodiments using I and Q signals. However the invention does not depend on the presence of such signals.

Embodiments may allow for reduction, or cancellation, of transmitter analogue non-idealities using already optimized full receiver chain without an envelope detector.

**Claims**

1. An RF transceiver comprising a transmitter, an antenna and a receiver having receiving circuitry for receiving RF signals from the antenna, the transmitter having first and second analog signal paths for carrying in-phase and quadrature signals and the transmitter being arranged in use to provide RF signals to the antenna, the transceiver having means for coupling RF signals from the transmitter to an RF input of the receiving circuitry and means for causing the receiving circuitry to form signals related to undesired frequencies in the RF signals from the transmitter, the transceiver having processing circuitry adapted to respond to the signals related to the undesired frequencies to control the transmitter to reduce the undesired frequencies.

2. The transceiver of claim 1, wherein the undesired frequencies are at least partly due to differences between the first and second analog signal paths.

3. The transceiver of claim 1, wherein the receiving circuitry comprises first and second receive mixers arranged to down-convert the RF signal from the antenna by mixing with a receiver signal in phase-quadrature, the processing circuitry being responsive to the down-converted signal.

4. The transceiver of claim 3, having a desired output frequency, wherein the receiver signal is selected so that the processing circuitry is responsive to the wanted and unwanted signals.

5. The transceiver of claim 1 wherein the transmitter is one of a direct up-conversion transmitter and an indirect up-conversion transmitter.

6. The transceiver of claim 1 wherein the means for coupling the RF signals of the transmitter to an RF input of the receiving circuitry is an on-chip loopback path.

7. The transceiver of claim 1 having a loopback path from an input to a transmit power amplifier and an input to a low-noise amplifier of the receiving circuitry.

8. The transceiver of claim 1, wherein the processing circuitry is further adapted to compensate for impairments in the receiving circuitry using the signals related to the undesired frequencies.

9. A method of transmitting RF signals from a transceiver comprising a transmitter, an antenna and a receiver having receiving circuitry for receiving RF signals from the antenna, the method comprising:-
   providing respective phase-quadrature signals over first and second analog signal paths, and converting signals from the first and second analog signal paths to RF for the antenna,
   coupling RF signals from the transmitter to an RF input of the receiving circuitry;
   controlling the receiving circuitry to form signals related to undesired frequencies in the RF signals from the transmitter, and
   in response to the signals related to the undesired frequencies, controlling the transmitter to reduce the undesired frequencies.

10. The method of claim 9, comprising mixing in-phase and quadrature information-carrying signals with respectively an in-phase transmitter LO signal and a quadrature transmitter LO signal to provide RF signals including a desired frequency.

11. The method of claim 9, comprising mixing a signal from the RF input with an in-phase receiver LO signal and a quadrature receiver LO signal to down-convert undesired frequencies in the RF output from the amplifier to form in-phase and quadrature receiver signals; and using the in-phase and quadrature receiver signals, controlling the transmitter to reduce said undesired frequencies.

12. The method of claim 9, wherein the transceiver has processing circuitry for processing signals output from the receiving circuitry to derive information from them, the method further comprising in response to the signals related to the undesired frequencies, controlling the processing circuitry to compensate for imbalance.

Fig 1

Fig 2

Fig 3

Fig 4

Fig 5